# EUROPÄISCHE PATENTSCHRIFT

(11) **EP 2 129 550 B1**
(45) Veröffentlichungstag und Bekanntmachung des Hinweises auf die Patenterteilung: **06.03.2013**
(21) Anmeldenummer: 08734695.3
(22) Anmeldetag: 20.03.2008
(51) Int. Cl.: B60R 5/04

(54) **DURCHLADEKLAPPE FÜR EINEN FAHRZEUGSITZ**
LOADING FLAP FOR A VEHICLE SEAT
VOLET DE CHARGEMENT PAR LE COFFRE POUR UN SIÈGE DE VÉHICULE À MOTEUR

(30) Priorität: 21.03.2007 DE 102007014070; 12.12.2007 DE 102007060319
(43) Veröffentlichungstag der Anmeldung: 09.12.2009
(73) Patentinhaber: Johnson Controls GmbH, 51399 Burscheid (DE)
(72) Erfinder: LINDNER, Ralf, 42327 Wuppertal (DE); LINDGENS, Markus, 41068 Mönchengladbach (DE); STAMM, Stefan, 01401 Bytca (SK)
(74) Vertreter: Wolff, Felix
(86) Internationale Anmeldenummer: PCT/EP2008/002258
(87) Internationale Veröffentlichungsnummer: WO 2008/113594

(56) Entgegenhaltungen:
- EP-A- 0 965 488
- DE-A1- 3 738 931
- DE-A1- 10 354 164
- DE-A1- 19 700 706
- DE-B3-102004 028 846
- DE-C1- 10 004 021

## Beschreibung

Die Erfindung betrifft eine Durchladeklappe, die schwenkbar an der Rückenlehne eines Fahrzeugsitzes, insbesondere einer Rücksitzbank, eines Kraftfahrzeugs. angeordnet und mit dieser verriegelbar ist.

Derartige Durchladeklappen sind aus dem Stand der Technik, beispielsweise der DE G 94 00 639 sowie der EP 0 965 488 bekannt, haben jedoch den Nachteil, dass sie bei einem Unfall möglicherweise keine Ausreichende Sicherheit bieten. Die DE-A- 19700706 offenbart eine Durchladeklappe gemäß dem Oberbegriff des Anspruchs 1.

Der Erfindung liegt die Aufgabe zugrunde, die Sicherheit gegen ungewolltes Öffnen der Durchladeklappe, insbesondere beim unfallbedingten Aufprall von Ladegut, zu erhöhen.

Gelöst wird die Aufgabe mit einer Durchladeklappe, die schwenkbar an der Rückenlehne eines Fahrzeugsitzes angeordnet und mit dieser verriegelbar ist, wobei die Verriegelung mit einem Form- und/oder Kraftschlussmittel, beispielsweise einem Riegel, erfolgt, das sich beim Ver- und Entriegeln translatorisch und rotatorisch bewegt.

Durch die überlagerten Bewegungen ist ein selbsttätiges Öffnen der Durchladeklappe zumindest erschwert. Die erfindungsgemäße Durchladeklappe ist einfach und kostengünstig herstellbar.

Die Erfindung betrifft eine Durchladeklappe, mit der längliche Gegenstände vom Kofferraum aus beispielsweise durch die Rückbank in die Fahrgastzelle geladen werden können. Vorzugsweise ist die Durchladeklappe im Bereich der Sitzstruktur auf der dem Kofferraum zugewandten Seite der Rückenlehne des Rücksitzes angeordnet. Diese Durchladeklappe ist erfindungsgemäß an der Rückenlehne schwenkbar von einer geschlossen in eine geöffnete Stellung und umgekehrt angeordnet. Vorzugsweise liegt die Durchladeklappe im geöffneten Zustand auf der Ladefläche des Kofferraums auf oder ist in diese eingelassen. In einer anderen bevorzugten Ausführungsform liegt die Durchladeklappe im geöffneten Zustand auf der Armlehne auf und ist besonders bevorzugt im geschlossenen Zustand in die Rückenlehne eingelassen. Weiterhin erfindungsgemäß ist die Durchladeklappe mit der Rückenlehne insbesondere im geschlossenen Zustand verriegelbar, um zu verhindern, dass, beispielsweise bei einem Unfall Gegenstände aus dem Laderaum in die Fahrgastzelle geraten. Diese Verriegelung erfolgt mit einem Form- und/oder Kraftschlussmittel, insbesondere mit einem Riegel. Im verriegelten Zustand ragt das Form- und/oder Kraftschlussmittel aus der Durchladeklappe heraus.

Dieses Form- und/oder Kraftschlussmittel vollführt beim Ver- und Entriegeln eine translatorische und eine rotatorische Bewegung relativ zu der Durchladeklappe. Die translatorische und/oder rotatorische Bewegung kann gleichzeitig oder zeitversetzt erfolgen. Vorzugsweise sind die Bewegungen jedoch überlagert, d.h. zumindest teilweise gleichzeitig.

Das Form- und/oder Kraftschlussmittel kann beispielweise ein Riegel sein, der vorzugsweise L-förmig oder hakenförmig gestaltet ist, wobei der hakenförmig gebogene Riegel besonders bevorzugt einen Hinterschnitt aufweist. Das Form- und/oder Kraftschlussmittel der Durchladeklappe wirkt im verriegelnden Zustand mit einem komplementären Schließstück an der Rückenlehne kraft- und/oder formschlüssig zusammen. Vorzugsweis umgreift das Form- und/oder Kraftschlussmittel einen Schließbolzen oder ein Schließstück in Rückenlehne drehfallenartig.

Neben diesem Form- und/oder Kraftschlussmittel kann an der Durchladeklappe, insbesondere an dem Gehäuse, ein zusätzliches Sicherungsmittel gegen ungewolltes Öffnen angeordnet sein.

Vorzugsweise weist die Durchladeklappe ein Gehäuse auf, das zum Öffnen der Durchladeklappe parallel zu dieser, entlang deren Oberfläche, translatorisch von dem Schließstück wegbewegbar ist. Besonders bevorzugt weist dieses Gehäuse einen Griff auf, mit dem das Gehäuse manuell betätigbar ist. Die Bewegung des Gehäuses entlang der Durchladeklappe wird vorzugsweise durch Führungselemente geführt.

Vorzugsweise ist das Form- und/oder Kraftschiussmittel um eine Drehachse drehbar an dem Gehäuse gelagert.

Weiterhin bevorzugt weist die Durchladeklappe einen Anschlag auf, an dem das Form- und/oder Kraftschlussmittel abrollt. Dieser Anschlag, an dem das Form-und/oder Kraftschlussmittel anliegt, bewirkt vorzugsweise, dass sich das Form-und/oder Kraftschlussmittel bei der translatorischen Bewegung des Gehäuses relativ zu dem Gehäuse dreht. Dadurch kommt es bei der translatorischen Bewegung des Gehäuses zu einer rotatorischen Bewegung des Form- und/oder Kraftschlussmittels, so dass dieses, durch seine Lagerung an dem Gehäuse, insgesamt eine translatorische und rotatorische Bewegung vollführt.

Vorzugsweise ist das Form- und/oder Kraftschlussmittel mit einem Federmittel in die schließende Stellung vorgespannt.

In einer bevorzugten Ausführungsform ist auch das Gehäuse mit einem Federmittel in eine schließende Stellung vorgespannt.

Vorzugsweise weist das Gehäuse eine Sicherung auf, die es in seiner geöffneten Stellung hält. Diese Sicherung wird besonders bevorzugt selbsttätig beim Verschließen der Klappe gelöst.

Im folgenden wird die Erfindung anhand der Figuren 1 - 4 erläutert. Diese Erläuterungen sind lediglich beispielhaft und schränken den allgemeinen Erfindungsgedanken nicht ein.

**Figuren 1-3** zeigen die Durchladeklappe im geschlossenen verriegelten Zustand.

**Figur 4** zeigt die Durchladeklappe im entriegelten Zustand.

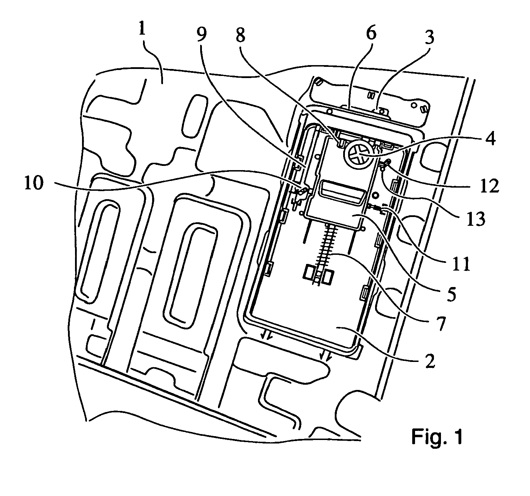

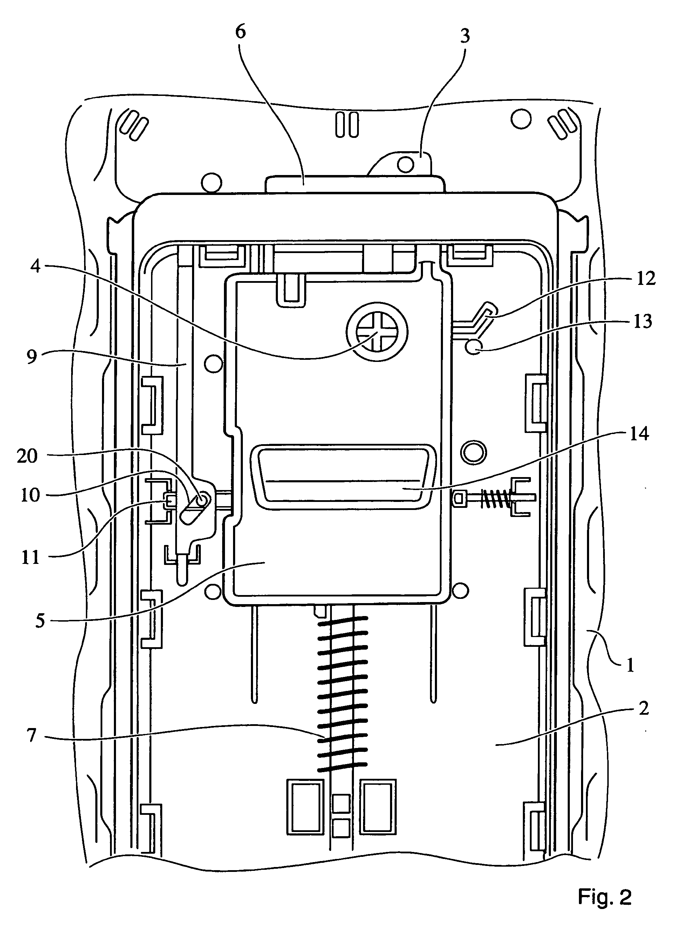

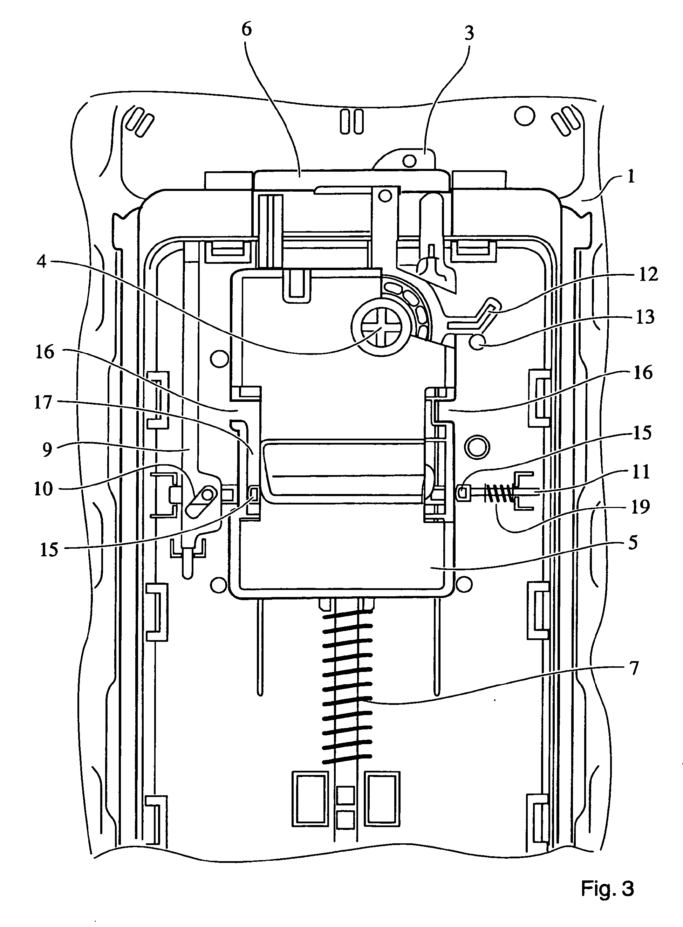

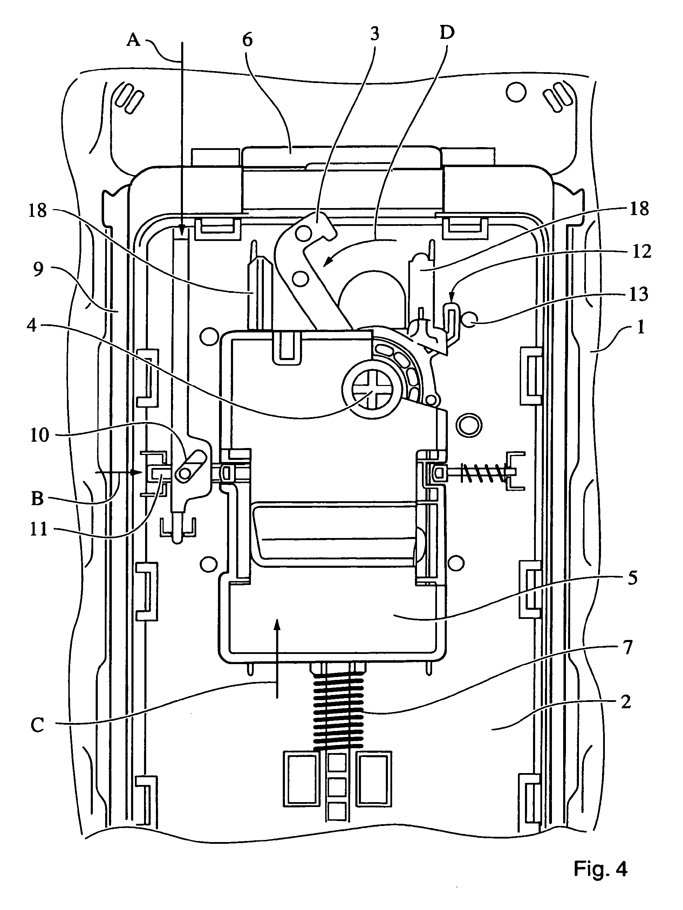

Die Figuren 1 bis 3 zeigen eine rückseitige Ansicht der Rückenlehne 1 einer Rücksitzbank mit einer darin schwenkbar eingelassenen Durchladeklappe 2, die an ihrer der Schwenkachse gegenüberliegenden Seite mittels eines Riegels 3 gegen ungewolltes Öffnen gesichert ist. Der hakenartig ausgeformte Riegel 3 ist um eine Drehachse 4 drehbar in einem (in Figur 1 geöffnet gezeigten) Gehäuse 5 angeordnet und greift in seiner Schließstellung in den Schlitz eines lehnenseitigen Schließstücks 6, der sich zur Kante der Durchladeklappe 2 hin öffnet. Des weiteren kann das Schließstück 6 einen Bolzen (nicht dargestellt) aufweisen, den der Riegel beim Schließen umgreift, was eine zusätzliche Sicherung des Bolzens gegen ungewolltes Öffnen darstellt. Weiterhin wirken die Sicherungsstifte 18, die an dem Gehäuse angeordnet sind, sichernd mit dem Schließstück 6 zusammen. Das längsverschieblich auf der Rückseite der Durchladeklappe gelagerte Gehäuse 5 wird durch eine Feder 7 in Richtung des Schließstücks 6 vorgespannt. Der Riegel 3 ist seinerseits gleichfalls durch eine Feder 8 in Schließrichtung belastet. Zum Öffnen der Durchladeklappe 2 wird das Gehäuse, wie durch Pfeil C in Figur 4 dargestellt, nach unten gezogen. Dafür weist das Gehäuse einen Griff 14 auf. Dabei wird die Federkraft der Feder 7 erhöht. Beim Bewegen des Gehäuses vom Schließstück 6 weg, werden die Schließmittel 18 außer Eingriff mit dem Schließstück 6 gebracht. Außerdem wird der Riegel 3 simultan durch Kontakt eines riegelseitigen Vorsprungs 12 mit einem durchladeklappenseitigen Anschlag 13 in seine Öffnungsstellung verdreht wird (Pfeil D). Dieser Zusammenhang ist in Figur 4 dargestellt.

Aus den Figuren 1 - 4 ist weiterhin ersichtlich, dass die erfindungsgemäße Durchladeklappe einen Schieber 11 aufweist, der quer zur Verschieberichtung des Gehäuses 5 ebenfalls verschiebbar an der Durchladeklappe angeordnet ist. An dem Schieber 11 sind Sicherungsmittel 15 angeordnet, die das Gehäuse in einer vom Schließstück 6 entfernten Stellung sichern. Diese Sicherungsmittel 15 wirken in dieser in Figur 4 dargestellten Stellung mit Ausnehmungen 16 im Gehäuse 5 formschlüssig zusammen. Beim Verschieben des Gehäuses in die öffnende Stellung bewegt sich das linke Sicherungsmittels entlang des Kanals 17. Der Schieber 11 ist mit einem Federmittel 19 so vorgespannt, dass die Sicherungsmittel 15 mit den Ausnehmungen 16 in Eingriff gebracht werden, sobald sich die Ausnehmungen 16 durch die Verschiebung des Gehäuses nach unten auf Höhe der Sicherungsmittel 15 befinden. Dadurch bewegt sich der gesamte Schieber 11 nach links. An dem Schieber 11 ist des weiteren ein Bolzen 20 angeordnet, der mit einer Kulissenumlenkung 10 zusammenwirkt, die an einem orthogonal zu dem Schieber 11 verschieblich vorgesehenen Stift 9 angeordnet ist. Der Bolzen 20 und die Kulisse 10 wirken so zusammen, dass der Stift 9 bei der Verschiebung des Schiebers 11 nach links nach oben gedrückt wird, so dass er aus der Durchladeklappe heraus steht.

Wird die Durchladeklappe nun wieder geschlossen, Stößt der Stift 9 gegen den Rahmen der Durchladeklappe, der an der Rückenlehne des Rücksitzes angeordnet ist, und wird dabei nach unten gedrückt (Pfeil A). Dadurch wird der Schieber, wie durch Pfeil B dargestellt, nach rechts geschoben. Dabei wird die Feder 19 komprimiert und der Formschluss zwischen den Sicherungsmitteln 15 und den Ausnehmungen 16 wird aufgehoben. Das Gehäuse ist demnach nicht mehr in seiner öffnenden Stellung gesichert und wird, was durch Pfeil C dargestellt ist, von der Feder 7 nach oben gedrückt. Dadurch verriegeln der Riegel 3 sowie die Sicherungsmittel 18 die Durchladeklappe wieder an der Rückenlehne.

### Bezugszeichenliste

- 1: Rückenlehne
- 2: Durchladeklappe
- 3: Form- und/oder Kraftschlussmittel, Riegel
- 4: Drehachse
- 5: Gehäuse
- 6: Schließstück
- 7,8: Feder
- 9: Stift
- 10: Kulissenumlenkung
- 11: Schieber
- 12: Vorsprung
- 13: Anschlag
- 14: Griff
- 15: Sicherungsmittel
- 16: Ausnehmung in dem Gehäuse 5
- 17: Führungskanal
- 18: Sicherungsmittel
- 19: Federmittel
- 20: Bolzen

## Patentansprüche

1. Durchladeklappe (2), die schwenkbar an der Rückenlehne (1) eines Fahrzeugsitzes angeordnet und mit dieser verriegelbar ist, **dadurch gekennzeichnet, dass** die Verriegelung mit einem Form- und/oder Kraftschlussmittel (3) erfolgt, das sich beim Ver- und Entriegeln translatorisch und rotatorisch Relativ zu der Durchladeklappe bewegt.

2. Durchladeklappe nach Anspruch 1, **dadurch gekennzeichnet, dass** sie ein Gehäuse (5) aufweist, das zum Öffnen der Durchladeklappe (2) parallel zu dieser translatorisch bewegbar ist.

3. Durchladeklappe nach Anspruch 2, **dadurch gekennzeichnet, dass** das Form- und/oder Kraftschlussmittel (3) um eine Drehachse (4) drehbar an dem Gehäuse (5) gelagert ist.

4. Durchladeklappe nach einem der voranstehenden Ansprüche, **dadurch gekennzeichnet, dass** sie einen Anschlag (13) aufweist, an dem das Form- und/oder Kraftschlussmittel (3) abrollt.

5. Durchladeklappe nach einem der voranstehenden Ansprüche, **dadurch gekennzeichnet, dass** das Form- und/oder Kraftschlussmittel (3) mit einem Federmittel (8) in die schließende Stellung vorgespannt ist.

6. Durchladeklappe nach einem der Ansprüche 2 - 5, **dadurch gekennzeichnet, dass** das Gehäuse (5) mit einem Federmittel (8) in eine schließende Stellung vorgespannt ist.

7. Durchladeklappe nach einem der Ansprüche 2 - 6, **dadurch gekennzeichnet, dass** das Gehäuse (5) eine Sicherung (11) in seiner geöffneten Stellung aufweist.

## Claims

1. Loading flap (2) which is pivotally mounted on the backrest (1) of a vehicle seat and may be locked with said backrest, **characterized in that** the locking operation may be carried out using a positive and/or non-positive means (3), which moves in a translatory and rotative manner relative to the loading flap during locking and unlocking.

2. Loading flap according to Claim 1, **characterized in that** it comprises a housing (5) which, for opening the loading flap (2), may be moved in a translatory manner parallel thereto.

3. Loading flap according to Claim 2, **characterized in that** the positive and/or non-positive connecting means (3) is rotatably mounted on the housing (5) about a pivot pin (4).

4. Loading flap according to one of the preceding claims, **characterized in that** it comprises a stop (13) on which the positive and/or non-positive connecting means (3) rolls.

5. Loading flap according to one of the preceding claims, **characterized in that** the positive and/or non-positive connecting means (3) is pretensioned by a spring means (8) into the closed position.

6. Loading flap according to one of Claims 2 - 5, **characterized in that** the housing (5) is pretensioned by a spring means (8) into a closed position.

7. Loading flap according to one of Claims 2 - 6, **characterized in that** the housing (5) has a securing means (11) in its open position.

## Revendications

1. Volet de chargement par le coffre (2), qui est disposé de manière pivotante sur le dossier (1) d'un siège de véhicule et peut être verrouillé sur ce dossier, **caractérisé en ce que** le verrouillage s'effectue à l'aide d'un moyen d'engagement par complémentarité de formes et/ou à force (3) qui se déplace en translation et en rotation par rapport au volet de chargement par le coffre lors du verrouillage et du déverrouillage.

2. Volet de chargement par le coffre selon la revendication 1, **caractérisé en ce qu'**il comprend un boîtier (5) qui peut être déplacé parallèlement au volet de chargement par le coffre (2) en vue de l'ouverture de ce dernier.

3. Volet de chargement par le coffre selon la revendication 2, **caractérisé en ce que** le moyen d'engagement par complémentarité de formes et/ou à force (3) est monté sur le boîtier (5) de manière à pouvoir tourner autour d'un axe de rotation (4).

4. Volet de chargement par le coffre selon l'une quelconque des revendications précédentes, **caractérisé en ce qu'**il comprend une butée (13) sur laquelle roule le moyen d'engagement par complémentarité de formes et/ou à force (3).

5. Volet de chargement par le coffre selon l'une quelconque des revendications précédentes, **caractérisé en ce que** le moyen d'engagement par complémentarité de formes et/ou à force (3) est précontraint dans la position de fermeture par un moyen de ressort (8).

6. Volet de chargement par le coffre selon l'une quelconque des revendications 2 à 5, **caractérisé en ce que** le boîtier (5) est précontraint dans une position de fermeture par un moyen de ressort (8).

7. Volet de chargement par le coffre selon l'une quelconque des revendications 2 à 6, **caractérisé en ce que** le boîtier (5) comprend un dispositif de fixation (11) dans sa position ouverte.
